# EUROPEAN PATENT SPECIFICATION

(11) **EP 2 557 574 B1**
(45) Date of publication and mention of the grant of the patent: **22.02.2017**
(21) Application number: 11177213.3
(22) Date of filing: 11.08.2011
(51) Int. Cl.: H01B 7/18, H01B 7/24, A01G 3/053

(54) **Sheath for electric cable and trimmer**
Hülle für elektrisches Kabel und Schnittvorrichtung
Gaine pour câble électrique et dispositif de coupe

(43) Date of publication of application: 13.02.2013
(73) Proprietor: Black & Decker Inc., Newark, Delaware 19711 (US)
(72) Inventor: Stratford, Mark, Darlington, Durham DL2 1GA (GB)
(74) Representative: SBD IPAdmin

(56) References cited:
- GB-A- 2 460 696
- JP-A- 2003 180 162
- US-A- 4 723 822
- US-A- 5 993 249

## Description

The present invention relates to a sheath for an electric cable for an electrically-powered trimmer and to an electrically-powered trimmer comprising a sheath.

Trimmers are well known tools for cutting hedges and, more generally, foliage from plants. Typically, a hedge trimmer includes a motor forming part of a drive train arranged to drive the motion of one or more suitably shaped blades, thereby to cut foliage. Typically two toothed blades are provided and they are driven in relative reciprocating motion such that stems or leaves caught between a pair of teeth on one of the blades are cut as the teeth blade shear with a pair of teeth on the other of the blades. Since it is the movement of the blades relative to each other that is important, in some cases, one axially reciprocating blade is provided disposed adjacent a stationary blade, the teeth of the stationary blade providing a reaction force for the teeth of the reciprocating blade. In another example, both blades are caused to move so as to generate the required relative motion. In other examples, more than two blades may be provided.

However the blades are arranged, there is a potential risk for trimmers that are powered via an electric cable that the cable may be severed or damaged by the blades of the trimmer which potentially may give rise to electrical shock hazards. Various schemes have been attempted to address this risk by managing the cable routing. In other schemes, it is known to put a sleeve or sheath around the cable at least in the vicinity of the device to protect the cable. The sheath is often circular with a diameter that is much greater than the gap between adjacent teeth, thereby preventing the cable from coming into contact with the cutting edges of the blades.

Prior art examples of sheaths for protecting cables of electric hedge trimmers are disclosed in, for example, JP-A-2003180162, US-B-6826837, GB-A-2246673, US4723822, US5993249, US6018874, GB-A-848,325 and GB-A-884,387, which all generally disclose circular sheaths which surround the cable and which are too large to fix in the spaces formed between the teeth of the trimmer.

These sheaths are often heavy and stiff and thus inconvenient for the user of the trimmer when trying to manipulate the trimmer. These prior art sheaths are also bulky and inconvenient to store when the trimmer is not in use.

According to the present invention, there is provided an electrically-powered trimmer according to claim 1.

According to a second aspect of the present invention, there is provided a sheath for the electric cable of an electrically-powered trimmer according to claim 11.

By having one or more thin protruding portion which "bottom out" on the base of the cutting space before the cable can enter the cutting space, the sheath can be made less bulky than prior art cable protectors, whilst maintaining protection against the cable being severed or damaged by the blades of the trimmer which potentially may give rise to electrical shock hazards. The less bulky sheath can also be advantageous in allowing the sheath to be coiled or otherwise stored away when the trimmer is not in use.

Preferably, the sheath is formed from a flexible foam material. This makes the sheath light and easy to manipulate for the operator of the trimmer.

In an embodiment, the sheath has a hard outer surface. This can be made to jam the blades of the trimmer when a protruding portion of the sheath enters the cutting space between teeth. The hard outer surface also protects the sheath from damage, leading to a longer life span.

In a preferred embodiment, the sheath has two portions that can be received in the cutting space and which extend beyond the cable by a distance that exceeds the depth d of the cutting space, the two portions being on opposite sides of the cable. The sheath may be relatively flat, wherein the maximum width across the sheath is at least twice the minimum width of the sheath. This allows the sheath to take up less space and be more lightweight. A flat sheath can also be made to coil more easily than prior art designs, which can be advantageous when storing the trimmer. Preferably the sheath is as thin as possible whilst still being able to accommodate the cable. For example, the sheath may be less than 250% of the diameter of the cable, or less than 200% of the diameter of the cable, or less than 150% of the diameter of the cable.

In a preferred embodiment, the sheath has a maximum width of 58 mm ± 10% and a minimum width of 16 mm ± 10%. This is useful with commonly found tooth sizes in trimmers.

In another embodiment, the sheath has three portions that can be received in the cutting space and which extend beyond the cable by a distance that exceeds the depth d of the cutting space, the three portions being at spaced circumferential positions relative to the cable.

The sheath may be triangular in cross section, the distance between vertices of the triangle being wider than the opening width w of the cutting space and the distance of the vertices of the triangle from the cable being greater than the depth d of the cutting space.

The sides of the triangle may be are concave.

In another embodiment, the sheath has four or more portions that can be received in the cutting space and which extend beyond the cable by a distance that exceeds the depth d of the cutting space, the four or more portions being at spaced circumferential positions relative to the cable.

Embodiments of the present invention will now be described in detail with reference to the accompanying drawings, in which:
Figure 1 shows an example of a hedge trimmer according to an embodiment of the present invention;
Figure 2 shows a detail section of the cutting blade of the trimmer;
Figure 3 shows a cross section of the cutting blade of the trimmer;
Figure 4 to 6 show in cross section an example of a sheath in accordance with an embodiment of the present invention; and,
Figures 7A to 7D show in cross section other examples of sheaths.

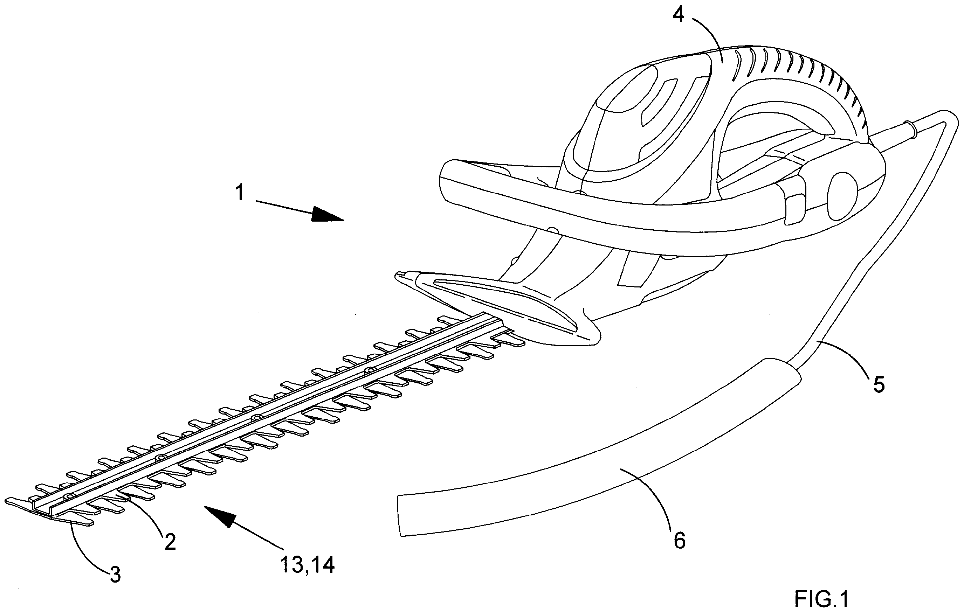

Referring first to Figure 1, a trimmer is shown having a blade assembly comprising two cutting blades 2,3 each having a plurality of cutting teeth 13,14. The trimmer has a body 4 which houses a motor (not shown) forming part of a drive train arranged to drive one of the blades 2,3 (the movable blade 2) with a reciprocating motion so as to achieve relative motion between the movable blade 2 and the other blade (the fixed blade 3) such that stems, leaves, etc. caught between a pair of adjacent teeth 13,14 on the blades 2,3 are cut between the teeth 13,14. The trimmer 1 has an electric cable 5 by which electric power is supplied to the trimmer 1, i.e. for powering the motor to drive the movement of the movable blade 2. A cable protector 6 is arranged around a portion of the cable approximate to where the cable inserts into the body of the trimmer 1.

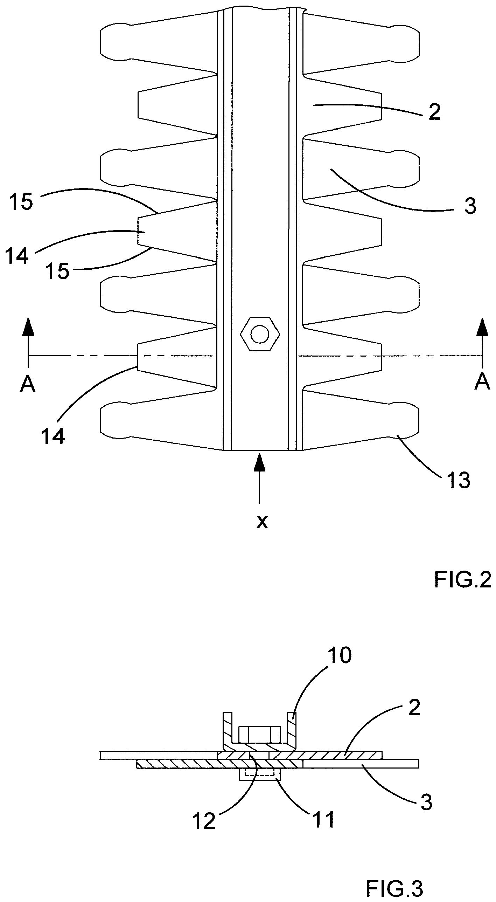

Figures 2 and 3 show the blades 2,3 in more detail. Figure 2 shows a detailed view of the end of the cutting blades 2,3 and Figure 3 shows a cross section through the blades 2,3 taken through lines A--A. In this example, the blade assembly has a fixed support bar 10 which is fixed relative to the body 4 of the trimmer 1 and is attached to the fixed blade 3 by fasteners 11 at points along its length. The movable blade 2 is "sandwiched" between the fixed blade 3 and the support bar 10 and has axial slots 12 therethrough in which the fasteners 11 can travel to allow the fixed blade 2 to move back and forth relative to the fixed blade 3 and support bar 10.

The teeth 13,14 on the blades 2,3 comprise two different types. For each blade 2,3, on one side of the blade the teeth 13 are larger and protrude further beyond the centreline of the blade, and on the other side of the blade the teeth 14 are smaller and protrude less far relative to the centreline of the blade. For each blade, the teeth 13,14 on the two sides of the blade are staggered with respect to each other side such that a tooth on one side is opposite a gap on the opposite side. The large teeth 13 and the small teeth 14 are on alternate sides of the blade on the movable blade 2 and the fixed blade 3 respectively. Thus, on each side of the blade assembly, large teeth 13 alternate with small teeth 14. The small teeth 14 have a cutting edge 15 on both sides. The large teeth 13 may or may not also have a cutting edge 15. Where they do not have a cutting edge 15, they just provide a reaction surface against which the cutting edges 15 of the small teeth 14 cut the foliage.

As will be appreciated from the following description, the present invention is not limited to these or any particular arrangement of cutting blades or teeth.

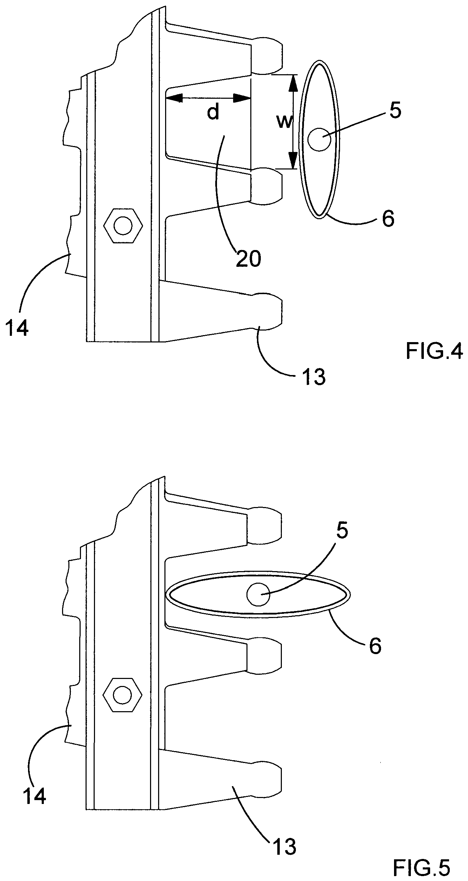

As shown in Figure 4, when the movable blade 2 is moved such that the teeth on the movable and fixed blades 2,3 are approximately aligned, the space between the teeth 2,3 is at its largest. This creates a cutting space 20 between the teeth 13,14 having a depth "d" and an opening "w". Anything entering this space is in the cutting path of the cutting edge or edges 15 of the cutting teeth 13,14 and will potentially be cut by the blades.

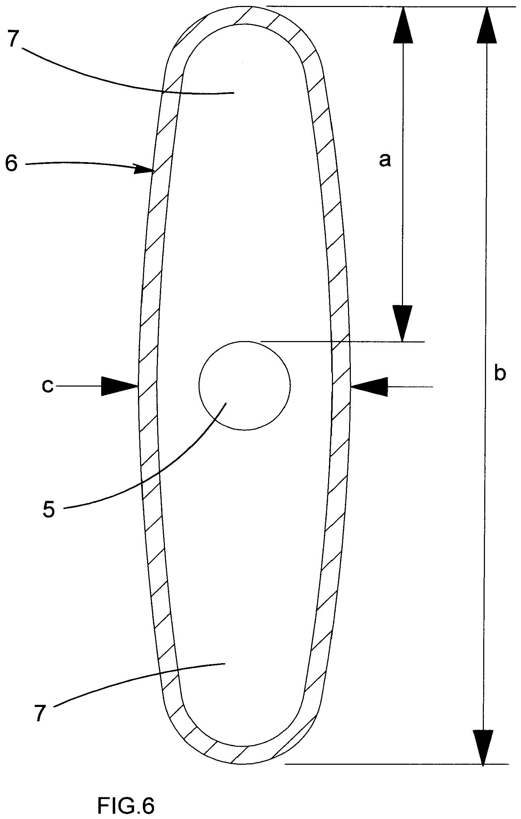

Figure 6 shows a cross section of an example of a sheath 6 for the cable 5. The sheath 6 is generally flat, having a rounded oblong shape in cross section with the cable 5 being located centrally within. Thus portions 7 of the sheath 6 protrude beyond the cable 5 in both directions along the major axis by a distance "a". The overall width of the sheath 6 along the major axis is designated "b". The width of the sheath 6 along the minor axis is "c".

Referring back to Figure 4, it can be seen that the width "b" of the sheath 6 along the major axis is greater than the width "w" of the opening of the cutting space 20. This prevents the sheath 6 from entering the cutting space 20 when the sheath 6 is orientated so that its major axis is generally parallel with the opening of the cutting space 20.

Referring to Figure 5, it can be seen that the protruding portions 7 of the sheath 6 can enter the cutting space 20 due to the relatively thinness of the protruding portions 7, i.e. the overall width "c" of the sheath 6 along its minor axis is relatively small and is smaller than the width "w" of the opening of the cutting space 20. The distance "a" that the protruding portion 7 of the sheath 6 extends beyond the cable 5 along the major axis is greater than the depth "d" of the cutting space 20. Thus, as the protruding portion 7 enters the cutting space 20, it "bottoms out" on the base of the cutting space 20 before the cable 6 enters the cutting space 20. This prevents the cable 5 from entering the cutting space 20 and being cut by the teeth 13,14.

Preferred dimensions for the sheath 6 are a = 16 mm ± 10%, b = 58mm ± 10% and c = 16 mm ± 10%. This makes the sheath 6 suitable for tooth sizes commonly found on many trimmers 1.

The sheath 6 may be made from flexible, lightweight foam. The sheath 6 may be injection moulded/extrusion moulded to the cable 5. Optionally, the sheath 6 can have a hard protective shell to protect it from being cut by the teeth 13,14 and to jam the teeth 13,14 if the sheath 6 enters the cutting space 20 between teeth 13,14. The sheath 6 can extend along all or part of the cable 5. Preferably the sheath extends for at least 1 m along the portion of the cable that is closest to the trimmer and that is capable of being caught between the teeth of the blades.

The sheath 6 has advantages compared with cable protection schemes proposed in the prior art where the cable protectors are circular in cross section and which have a diameter which is significantly bigger than the width of the opening between teeth so as to avoid any significant part the sheath entering the cutting space between the teeth. The prior art cable protectors are prone to being heavy and stiff and are generally unwieldy and inconvenient for the operator to handle.

In contrast, the sheath 6 of Figure 6 can be made much less bulky and lightweight than the prior art arrangements and thus are easier for the operator to handle. The sheath 6 of Figure 6 is may also be easier to coil when the trimmer 1 is stored than prior art cable protectors due to its cross section and relatively smaller bulk.

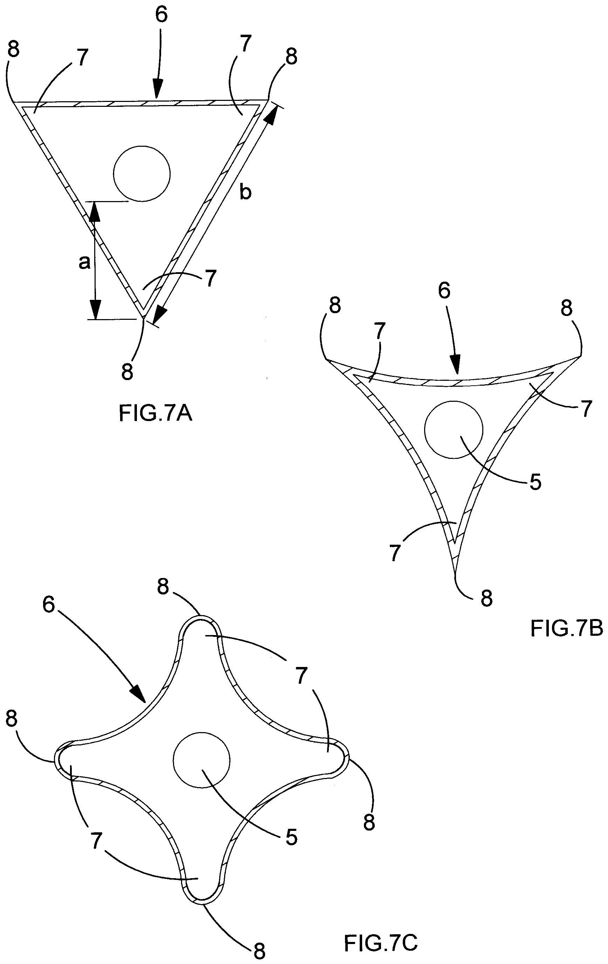

Other dimensions for the sheath 6 can be used. For example Figure 7A shows a sheath 6 with three protruding portions 7, forming a triangle in cross section. The protruding portions 7 corresponding to the "points" of the triangle can be received in the cutting space 20. The protruding portions 7 are narrow enough that they can fit in the cutting space and the vertices 8 of the triangle (i.e. the points which protrude furthest from the cable along these axes) extend beyond the cable 5 by a distance "a" that exceeds the depth "d" of the cutting space 20. Thus when the sheath 6 is advanced towards the cutting space 20 with one of the points 8 leading, the protruding portion 7 enters the cutting space 20 and "bottoms out" against the base of the teeth before the cable 5 can enter the cutting space 20. The distances "b" between the vertices 8 of the triangle (i.e. the length of the sides of the triangle) exceed the width "w" of the opening of the cutting space 20. Thus, when the sheath 6 is advanced towards the cutting space 20 with the base of the triangle leading, the width "b" of the base prevents the sheath 6 and thus the cable 5 from entering the cutting space 20. Thus, in no orientation of the sheath 6 can the cable enter the cutting space 20 between the teeth.

As shown by Figure 7B, the sides of the triangle can be concave.

This principle can be extended to other shapes having four, five, six or more protruding portions. For example, as shown by Figure 7C, the sheath 6 can have four protruding portions 7, the points 8 of which form a square or rectangle, having either concave or straight sides, etc.

By having one or more thin protruding portion 7 which "bottom out" on the base of the cutting space 20 before the cable 5 enters the cutting space 20, the sheath 6 can be made less bulky than prior art cable protectors whilst maintaining protection against the cable 5 being severed or damaged by the blades of the trimmer 1 which potentially may give rise to electrical shock hazards.

Embodiments of the present invention have been described with particular reference to the examples illustrated. However, it will be appreciated that variations and modifications may be made to the examples described within the scope of the present invention.

## Claims

1. An electrically-powered trimmer comprising:
a body (4);
first and second cutting blades (2, 3) extending from the body (4) each having a plurality of teeth (13, 14), at least one blade being movable relative to the other blade such that foliage can be cut between the teeth (13, 14), wherein adjacent teeth (13, 14) form a cutting space having a depth d and an opening width w;
a cable (5) attached to the body (4) for supplying electrical power to the trimmer; and,
a sheath (6) disposed about at least a part of the cable (5), wherein
at least one portion (7) of the sheath (6) is wider than the opening width w of the cutting space
such that the dimensions of the sheath (6) prevent the cable (5) from entering the cutting space for any orientation of the sheath (6) **characterised in that**
at least one portion (7) of the sheath (6) can be received in the cutting space and extends beyond the cable (5) by a distance that exceeds the depth d of the cutting space.

2. A trimmer according to claim 1 wherein the sheath (6) is formed from a flexible foam material.

3. A trimmer according to any of claims 1 to 2, wherein the sheath (6) has a hard outer surface.

4. A trimmer according to any of claims 1 to 3, wherein the sheath (6) has two portions (7) that can be received in the cutting space and which extend beyond the cable by a distance that exceeds the depth d of the cutting space, the two portions being on opposite sides of the cable.

5. A trimmer according to claim 4 where the sheath is relatively flat, wherein the maximum width across the sheath is at least twice the minimum width of the sheath.

6. A trimmer according to claim 5, wherein the sheath has a maximum width of 58 mm ± 10% and a minimum width of 16 mm ± 10%.

7. A trimmer according to claim 1, wherein the sheath (6) has three portions (7) that can be received in the cutting space and which extend beyond the cable (5) by a distance that exceeds the depth d of the cutting space, the three portions (7) being at spaced circumferential positions relative to the cable (5).

8. A trimmer according to claim 7, wherein the sheath (6) is triangular in cross section, the distance between vertices of the triangle being wider than the opening width w of the cutting space and the distance of the vertices of the triangle from the cable being greater than the depth d of the cutting space.

9. A trimmer according to claim 8, wherein the sides of the triangle are concave.

10. A trimmer according to claim 1, wherein the sheath (6) has four or more portions (7) that can be received in the cutting space and which extend beyond the cable (5) by a distance that exceeds the depth d of the cutting space, the four or more portions (7) being at spaced circumferential positions relative to the cable (5).

11. A sheath (6) for the electric cable (5) of an electrically-powered trimmer, the trimmer being of the type having blades (2, 3) having a plurality of teeth (13, 14), at least one blade (2, 3) being movable relative to the other blade (2, 3) such that foliage can be cut between the teeth (13, 14), wherein adjacent teeth (13, 14) form a cutting space having a depth d of at least 25 mm ± 10% and an opening width w of at least 20 mm ± 10%,
the sheath (16) being disposed about at least a part of the cable (5), wherein at least one portion (7) of the sheath (6) is wider than the opening width w of the cutting space
such that the dimensions of the sheath (6) prevent the cable (5) from entering the cutting space for any orientation of the sheath (6) **characterised in that**
at least one portion (7) of the sheath (6) extends beyond the cable (5) by a distance that exceeds the depth d of the cutting space and which is narrower than the opening of the cutting space w.

## Patentansprüche

1. Elektrisch betriebener Trimmer, umfassend:
einen Körper (4);
erste und zweite Schneideklingen (2, 3), die sich vom Körper (4) erstrecken, jede mit mehreren Zähnen (13, 14), wobei zumindest eine Klinge relativ zur anderen Klinge beweglich ist, sodass Laub zwischen den Zähnen (13, 14) geschnitten werden kann, wobei angrenzende Zähne (13, 14) einen Schnittbereich mit einer Tiefe d und einer Öffnungsweite w bilden;
ein Kabel (5), das am Körper (4) befestigt ist, zur Zuleitung von elektrischem Strom zum Trimmer; und
einen Mantel (6), der um zumindest einen Teil des Kabels (5) angeordnet ist, wobei
zumindest ein Abschnitt (7) des Mantels (6) breiter ist als die Öffnungsweite w des Schnittbereichs,
sodass die Abmessungen des Mantels (6) verhindern, dass das Kabel (5) in irgendeiner Ausrichtung des Mantels (6) in den Schnittbereich gerät, **dadurch gekennzeichnet, dass**
zumindest ein Abschnitt (7) des Mantels (6) im Schnittbereich aufgenommen werden kann und sich über das Kabel (5) über eine Strecke hinaus erstreckt, die die Tiefe d des Schnittbereichs überschreitet.

2. Trimmer nach Anspruch 1, wobei der Mantel (6) aus einem flexiblen Schaummaterial gebildet ist.

3. Trimmer nach einem der Ansprüche 1 bis 2, wobei der Mantel (6) eine harte Außenfläche hat.

4. Trimmer nach einem der Ansprüche 1 bis 3, wobei der Mantel (6) zwei Abschnitte (7) hat, die im Schnittbereich aufgenommen werden können und die sich über das Kabel über eine Strecke hinaus erstrecken, die die Tiefe d des Schnittbereichs d überschreitet, wobei die zwei Abschnitte an entgegengesetzten Seiten des Kabels liegen.

5. Trimmer nach Anspruch 4, wo der Mantel relativ flach ist, wobei die maximale Breite über den Mantel zumindest zweimal die minimale Breite des Mantels ist.

6. Trimmer nach Anspruch 5, wobei der Mantel eine maximale Breite von 58 mm ± 10% und eine minimale Breite von 16 mm ± 10% hat.

7. Trimmer nach Anspruch 1, wobei der Mantel (6) drei Abschnitte (7) hat, die im Schnittbereich aufgenommen werden können und die sich über das Kabel (5) über eine Strecke hinaus erstrecken, die die Tiefe d des Schnittbereichs überschreitet, wobei die drei Abschnitte (7) an beabstandeten Umfangspositionen relativ zum Kabel (5) liegen.

8. Trimmer nach Anspruch 7, wobei der Mantel (6) im Querschnitt dreieckig ist, wobei der Abstand zwischen Eckpunkten des Dreiecks breiter ist als die Öffnungsbreite w des Schnittbereichs und wobei der Abstand der Eckpunkte des Dreiecks zum Kabel größer ist als die Tiefe d des Schnittbereichs.

9. Trimmer nach Anspruch 8, wobei die Seiten des Dreiecks konkav sind.

10. Trimmer nach Anspruch 1, wobei der Mantel (6) vier oder mehr Abschnitte (7) hat, die im Schnittbereich aufgenommen werden können und die sich über das Kabel (5) über eine Strecke hinaus erstrecken, die die Tiefe d des Schnittbereichs überschreitet, wobei die vier oder mehr Abschnitte (7) an beabstandeten Umfangspositionen relativ zum Kabel (5) liegen.

11. Mantel (6) für das elektrische Kabel (5) eines elektrisch betriebenen Trimmers, wobei der Trimmer vom Typ mit Klingen (2, 3) mit mehreren Zähnen (13, 14) ist, wobei zumindest eine Klinge (2, 3) relativ zur anderen Klinge (2, 3) beweglich ist, sodass Laub zwischen den Zähnen (13, 14) geschnitten werden kann, wobei angrenzende Zähne (13, 14) einen Schnittbereich mit einer Tiefe d von zumindest 25 mm ± 10% und einer Öffnungsbreite w von zumindest 20 mm ± 10% bilden, wobei der Mantel (16) um zumindest einen Teil des Kabels (5) herum angeordnet ist, wobei
zumindest ein Abschnitt (7) des Mantels (6) breiter ist als die Öffnungsbreite w des Schnittbereichs,
sodass die Abmessungen des Mantels (6) verhindern, dass das Kabel (5) in irgendeiner Ausrichtung des Mantels (6) in den Schnittbereich gerät, **dadurch gekennzeichnet, dass**
zumindest ein Abschnitt (7) des Mantels (6) sich über das Kabel (5) über eine Strecke hinaus erstreckt, die die Tiefe d des Schnittbereichs überschreitet und die schmaler ist als die Öffnung des Schnittbereichs w.

## Revendications

1. Taille-haie électrique comprenant :
un corps (4) ;
des première et seconde lames de coupe (2, 3) s'étendant à partir du corps (4) chacune ayant une pluralité de dents (13, 14), au moins une lame étant mobile par rapport à l'autre lame de sorte qu'un feuillage peut être coupé entre les dents (13, 14), dans lequel des dents adjacentes (13, 14) forment un espace de coupe ayant une profondeur d et une largeur d'ouverture w ;
un câble (5) attaché au corps (4) pour fournir de l'énergie électrique au taille-haie ; et
une gaine (6) disposée autour d'au moins une partie du câble (5), dans laquelle
au moins une partie (7) de la gaine (6) est plus large que la largeur d'ouverture w de l'espace de coupe
de sorte que les dimensions de la gaine (6) empêchent le câble (5) d'entrer dans l'espace de coupe pour n'importe quelle orientation de la gaine (6), **caractérisée en ce que**
au moins une partie (7) de la gaine (6) peut être reçue dans l'espace de coupe et s'étend au-delà du câble (5) sur une distance qui dépasse la profondeur d de l'espace de coupe.

2. Taille-haie selon la revendication 1, dans lequel la gaine (6) est formée à partir d'une matière alvéolaire souple.

3. Taille-haie selon l'une quelconque des revendications 1 à 2, dans lequel la gaine (6) a une surface extérieure dure.

4. Taille-haie selon l'une quelconque des revendications 1 à 3, dans lequel la gaine (6) a deux parties (7) qui peuvent être reçues dans l'espace de coupe et qui s'étendent au-delà du câble sur une distance qui dépasse la profondeur d de l'espace de coupe, les deux parties étant sur des côtés opposés du câble.

5. Taille-haie selon la revendication 4 où la gaine est relativement plate, dans lequel la largeur maximale d'un bout à l'autre de la gaine est au moins deux fois la largeur minimale de la gaine.

6. Taille-haie selon la revendication 5, dans lequel la gaine a une largeur maximale de 58 mm ± 10 % et une largeur minimale de 16 mm ± 10 %.

7. Taille-haie selon la revendication 1, dans lequel la gaine (6) a trois parties (7) qui peuvent être reçues dans l'espace de coupe et qui s'étendent au-delà du câble (5) sur une distance qui dépasse la profondeur d de l'espace de coupe, les trois parties (7) étant à des positions circonférentielles espacées par rapport au câble (5).

8. Taille-haie selon la revendication 7, dans lequel la gaine (6) est triangulaire en section transversale, la distance entre les sommets du triangle étant plus large que la largeur d'ouverture w de l'espace de coupe et la distance des sommets du triangle par rapport au câble étant plus grande que la profondeur d de l'espace de coupe.

9. Taille-haie selon la revendication 8, dans lequel les côtés du triangle sont concaves.

10. Taille-haie selon la revendication 1, dans lequel la gaine (6) a quatre parties ou plus (7) qui peuvent être reçues dans l'espace de coupe et qui s'étendent audelà du câble (5) sur une distance qui dépasse la profondeur d de l'espace de coupe, les quatre parties ou plus (7) étant à des positions circonférentielles espacées par rapport au câble (5).

11. Gaine (6) pour le câble électrique (5) d'un taille-haie électrique, le taille-haie étant du type ayant des lames (2, 3) ayant une pluralité de dents (13, 14), au moins une lame (2, 3) étant mobile par rapport à l'autre lame (2, 3) de sorte que le feuillage peut être coupé entre les dents (13, 14), dans lesquelles les dents adjacentes dans lesquelles (13, 14) forment un espace de coupe ayant une profondeur d d'au moins 25 mm ± 10 % et une largeur d'ouverture w d'au moins 20 mm ± 10 %,
la gaine (16) étant disposée autour d'au moins une partie du câble (5), dans laquelle
au moins une partie (7) de la gaine (6) est plus large que la largeur d'ouverture w de l'espace de coupe
de sorte que les dimensions de la gaine (6) empêchent le câble (5) d'entrer dans l'espace de coupe pour n'importe quelle orientation de la gaine (6) **caractérisée en ce que**
au moins une partie (7) de la gaine (6) s'étend au-delà du câble (5) sur une distance qui dépasse la profondeur d de l'espace de coupe et qui est plus étroite que l'ouverture de l'espace de coupe w.
